# EUROPÄISCHE PATENTSCHRIFT

(11) **EP 2 183 469 B1**
(45) Veröffentlichungstag und Bekanntmachung des Hinweises auf die Patenterteilung: **27.06.2012**
(21) Anmeldenummer: 08803558.9
(22) Anmeldetag: 03.09.2008
(51) Int. Cl.: F01L 1/26, F01L 1/344, F02B 37/20, F02D 13/02, F02D 23/00, F01L 1/047, F02B 41/10

(54) **KOLBENMOTOR**
PISTON ENGINE
MOTEUR À PISTON

(30) Priorität: 05.09.2007 DE 102007042053
(43) Veröffentlichungstag der Anmeldung: 12.05.2010
(73) Patentinhaber: MAHLE International GmbH, 70376 Stuttgart (DE)
(72) Erfinder: ELSÄSSER, Alfred, 75210 Keltern (DE); HOFFMANN, Hermann, 70599 Stuttgart (DE); SENJIC, Sascha, 73760 Ostfildern (DE); WIESKE, Peter, 70825 Korntal-Münchingen (DE)
(74) Vertreter: BRP Renaud & Partner
(86) Internationale Anmeldenummer: PCT/EP2008/061587
(87) Internationale Veröffentlichungsnummer: WO 2009/030694

(56) Entgegenhaltungen:
- EP-A- 1 195 505
- EP-A- 1 870 583
- WO-A-01/20136
- WO-A-2007/003360
- FR-A- 2 744 170
- GB-A- 2 185 286
- GB-A- 2 369 175
- JP-A- 6 323 158
- US-A1- 2005 235 939

## Beschreibung

Die vorliegende Erfindung betrifft einen Kolbenmotor, insbesondere für ein Kraftfahrzeug, mit den Merkmalen des Oberbegriff des Anspruchs 1.

Kolbenmotoren weisen mehrere Zylinder auf, in denen jeweils ein Kolben hubverstellbar gelagert ist. Für Ladungswechselvorgänge weist jeder Zylinder zumindest ein Einlassventil und zumindest ein Auslassventil auf. Moderne Motoren können mehrere Einlassventile bzw. mehrere Auslassventile aufweisen.

Zur Leistungssteigerung kann ein Kolbenmotor mit einem Abgasturbolader ausgestattet sein, mit dem der Druck im Frischgas erhöht werden kann. Bei derartigen aufgeladenen Motoren besteht insbesondere bei niedrigen Drehzahlen häufig das Problem, dass bei einem Lastsprung von Teillast zu Volllast der Turbolader aufgrund der Massenträgheit des Laufzeugs nur verzögert anspricht, wodurch das sogenannte "Turboloch" entsteht.

Aus der US 2005/0235939 A1 ist ein Kolbenmotor der eingangs genannten Art bekannt. Er umfasst zumindest einen Zylinder, der wenigstens zwei Auslassventile aufweist, sowie eine Doppelnockenwelle zum Steuern der Auslassventile. Die Doppelnockenwelle weist eine Innenwelle mit wenigstens einem ersten Nocken zum Steuern des jeweiligen ersten Auslassventils und eine dazu koaxiale Außenwelle mit wenigstens einem zweiten Nocken zum Steuern des jeweiligen zweiten Auslassventils auf. Die Innenwelle und die Außenwelle sind zum Verändern des Auslasszeitfensters der Auslassventile relativ zueinander drehverstellbar.

Aus der GB 2 185 286 A ist eine Brennkraftmaschine bekannt, deren Zylinder jeweils zwei Auslassventile aufweisen. Dabei steuert ein Haupt-Auslassventil eine Hauptabgasleitung, die eine Turbine eines Abgasturboladers umgeht. Ein Zusatz-Auslassventil steuert eine Zuführleitung zur Turbine. Die Steuerzeiten der Ventile sind so aufeinander abgestimmt, dass das Zusatz-Auslassventil immer dann offen ist, wenn das Abgas des jeweiligen Zylinders eine besonders hohe Abgasentalpie enthält, um die Turbine anzutreiben.

Die vorliegende Erfindung beschäftigt sich mit dem Problem, für einen Kolbenmotor der eingangs genannten Art eine verbesserte Ausführungsform anzugeben, die sich insbesondere dadurch auszeichnet, dass damit ein relativ schnelles Ansprechen eines gegebenenfalls vorhandenen Abgasturboladers erzielbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei wenigstens einem der Zylinder den abgasseitigen Auslass früher als üblich zu öffnen, also zu einem Zeitpunkt, zu dem das Abgas im Zylinder noch einen gegenüber einem späteren Öffnungszeitpunkt höheren Druck sowie eine höhere Temperatur aufweist. Alternativ beruht die Erfindung auf dem allgemeinen Gedanken, bei wenigstens einem der Zylinder den abgasseitigen Auslass später als üblich zu öffnen, also zu einem Zeitpunkt, zu dem das Abgas im Zylinder bereits wieder einen gegenüber einem früheren Öffnungszeitpunkt erhöhten Druck sowie eine erhöhte Temperatur aufweist. Durch die jeweilige Maßnahme können vorübergehend der Druck und die Temperatur im Abgas und somit die Enthalpie im Abgas nach dem jeweiligen Zylinder vergrößert werden. Sofern in der Abgasleitung eine Turbine eines Abgasturboladers angeordnet ist, steht für diese somit eine gegenüber einer üblichen Steuerzeit erhöhte Energie zum Beschleunigen des Laufzeugs zur Verfügung. Der Abgasturbolader kann dadurch schneller hochfahren und auf der Frischgasseite die gewünschte Druckerhöhung erzeugen.

Erreicht wird dies beim erfindungsgemäßen Kolbenmotor mit Hilfe einer Doppelnockenwelle, mit deren Hilfe die Auslassventile der Zylinder gesteuert werden. Dabei weist die Doppelnockenwelle eine Innenwelle und koaxial dazu eine als Hohlwelle ausgestaltete Außenwelle auf, die relativ zueinander drehverstellbar sind. Die Wellen tragen jeweils drehfest daran angeordnete Nocken zum Steuern der Auslassventile. Dabei weist zumindest einer der Zylinder zwei Auslassventile auf, von denen das eine über einen Nocken der Innenwelle steuerbar ist, während das andere über einen Nocken der Außenwelle steuerbar ist. Durch Verändern der Relativlage, also der relativen Drehlage zwischen den beiden Wellen lässt sich das Auslasszeitfenster variieren. Insbesondere lassen sich der Öffnungszeitpunkt und der Schließzeitpunkt unabhängig voneinander nach früh und/oder spät verschieben. Um den Enthalpiegehalt des ausgeschobenen Abgases zu erhöhen, ist es somit insbesondere möglich, den Öffnungszeitpunkt des Auslasszeitfenster nach früh oder nach spät zu verschieben, indem die Relativlage zwischen den Wellen entsprechend variiert wird. Der Schließzeitpunkt des Auslasszeitfensters kann dabei konstant bleiben.

Bei einer ersten erfindungsgemäßen Alternative können die beiden Auslassventile so betätigt werden, dass sie bei einem Normalbetrieb synchron öffnen. Bei identischen Nocken ergeben sich dann auch gleiche Schließzeitpunkte. Insgesamt kann somit für den Normalbetrieb ein konventionelles Auslasszeitfenster realisiert werden. Um nun den Turbolader zu beschleunigen, wird der Öffnungszeitpunkt des einen Auslassventils nach früh verschoben, während das andere Auslassventil unverändert bleibt. Insgesamt wird dadurch das Auslasszeitfenster bei gleichem Schließzeitpunkt nach früh vergrößert. Somit kann Abgas, das noch eine höhere Temperatur und einen höheren Druck besitzt, zum Beschleunigen der Turbine genutzt werden.

Bei einer zweiten erfindungsgemäßen Alternative ist vorgesehen, die beiden Auslassventile während eines Normalbetriebs asynchron zu betreiben, also zeitlich versetzt. Hierdurch ergibt sich ein Auslasszeitfenster, das größer ist als die Öffnungszeitfenster der einzelnen Auslassventile. Das Auslasszeitfenster beginnt mit dem Öffnungszeitpunkt des früher öffnenden Auslassventils und endet mit dem Schließzeitpunkt des später schließenden Auslassventils. Insbesondere ist es hierbei möglich, Nocken zu verwenden, die für das einzelne Auslassventil Öffnungszeitfenster realisieren, die kleiner sind als herkömmliche Auslasszeitfenster. Insgesamt können durch die zeitlich versetzt betätigten Auslassventile dennoch konventionelle Auslasszeitfenster dargestellt werden. Zum Beschleunigen der Turbine wird nun der Öffnungszeitpunkt des früher öffnenden Auslassventils nach spät verschoben, während das andere Auslassventil unverändert betätigt wird. Hierdurch wird das Auslasszeitfenster verkürzt, und zwar bei gleichem Schließzeitpunkt in Richtung spät. Insbesondere ist es dadurch möglich, den Öffnungszeitpunkt für das Auslasszeitfenster in einen Bereich zu verschieben, der nach dem unteren Totpunkt eines im jeweiligen Zylinder hubverstellbaren Kolbens liegt, so dass bereits wieder ein Rekompressionshub stattfindet. Bei einem solchen Öffnungszeitpunkt hat das Abgas bereits wieder einen erhöhten Druck sowie eine erhöhte Temperatur, was zum Beschleunigen der Turbine genutzt werden kann.

Grundsätzlich können alle Zylinder des Kolbenmotors zwei oder mehr Auslassventile aufweisen, die über die beiden Wellen der Doppelnockenwelle separat ansteuerbar sind. Ebenso ist eine Ausführungsform denkbar, bei der die Anzahl der Zylinder, deren zwei oder mehr Auslassventile über die beiden Wellen der Doppelnockenwelle separat ansteuerbar sind, kleiner ist als die Gesamtzahl der Zylinder des Kolbenmotors. Insbesondere benötigen diejenigen Zylinder, deren Auslassventile nur mit einer Welle der Doppelnockenwelle zusammenwirken, im Grunde nur ein Auslassventil.

Besonders vorteilhaft ist eine Ausführungsform, bei welcher der Kolbenmotor zusätzlich mit wenigstens einem schnellschaltenden Ventil ausgestattet ist, das stromauf von den Zylindern zugeordneten Einlassventilen in einer Frischgas führenden Leitung des Kolbenmotors angeordnet ist. Dabei kann ein einziges schnellschaltendes Ventil vorgesehen sein, das allen Zylindern zugeordnet ist. Ebenso ist eine Ausführungsform möglich, bei der jedem Zylinder ein separates schnellschaltendes Ventil zugeordnet ist. Derartige schnellschaltende Ventile, deren Schaltzeiten zwischen Öffnen und Schließen kleiner als 50 ms oder kleiner als 10 ms sind, können auf unterschiedliche Weise genutzt werden. Beispielsweise kann die Zeitdauer des Einlassvorgangs mit Hilfe derartiger schnellschaltender Ventile begrenzt werden. Auf diese Weise kann unabhängig von einer Ventilerhebungskontur einer Einlassnockenwelle die Zeitdauer für das Einströmen von Frischgas bzw. eines Kraftstoffgemischs entsprechend Last und Drehzahl betriebspunktspezifisch angepasst werden. Durch frühes Beenden des Einlassvorgangs beim Ladungswechsel kann insbesondere die Temperatur des Verbrennungsprozesses reduziert werden, wodurch die Bildung von NOₓ reduziert wird. Bei Motoren, deren Laststeuerung über eine Füllungssteuerung mittels Drosselklappe realisiert ist, kann das frühe Beenden des Einlassvorgangs zur Entdrosselung genutzt werden, was sich vorteilhaft auf den thermischen Wirkungsgrad auswirkt.

Desweiteren kann mit Hilfe derartiger schnellschaltender Ventile eine Impulsaufladung der Zylinder realisiert werden. Hierbei werden gasdynamische Effekte ausgenutzt. Insbesondere können Schwingungen der Gassäule im Frischgaspfad erzeugt bzw. gezielt verstärkt werden, wodurch sich die Füllung der Zylinder mit Frischladung oder Frischgas erhöht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines abgasturboaufgeladenen Kolbenmotors,
- Fig. 2: eine vereinfachte Prinzipdarstellung einer Doppelnockenwelle im Bereich eines Zylinders,
- Fig. 3: eine Ansicht wie in Fig. 1, jedoch bei einer anderen Ausführungsform,
- Fig. 4: eine Ansicht wie in Fig. 1, jedoch bei einer weiteren Ausführungsform,
- Fig. 5: ein Diagramm, in dem ein exemplarischer Druckverlauf bei konventionellen Steuerzeiten in einem Zylinder und exemplarische Hubverläufe von zwei Auslassventilen dieses Zylinders dargestellt sind,
- Fig. 6: ein Diagramm wie in Fig. 5, jedoch bei einer anderen Ausführungsform.

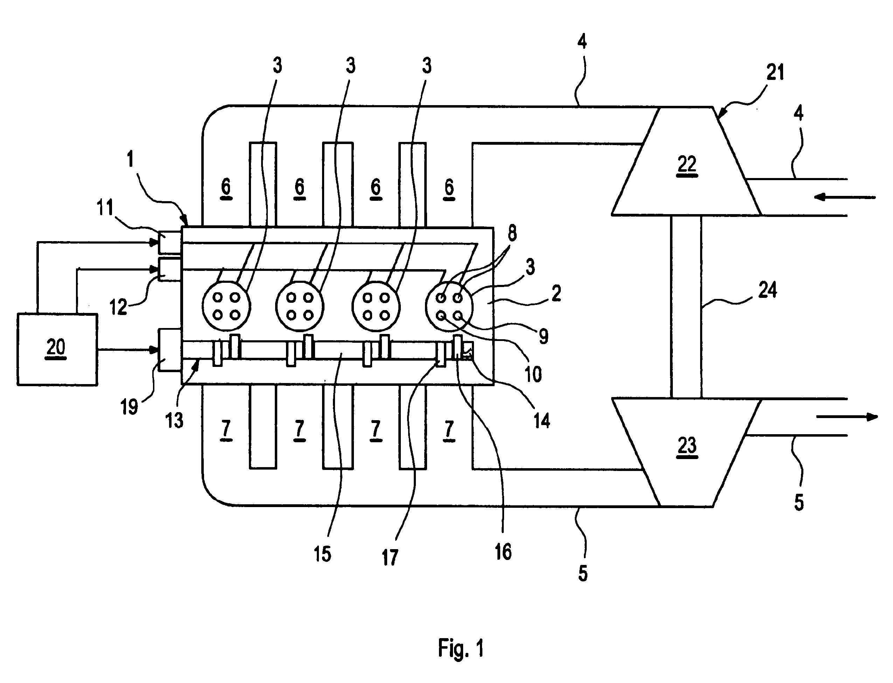

Entsprechend Fig. 1 umfasst ein erfindungsgemäßer Kolbenmotor 1 in einem Motorblock 2 zumindest einen Zylinder 3. Im Beispiel sind vier Zylinder 3 in Reihe vorgesehen. Es ist klar, dass grundsätzlich auch eine andere Anzahl und/oder Anordnung der Zylinder 3 möglich ist. Die Zylinder 3 des Kolbenmotors 1 werden über eine Frischgasleitung 4 mit Frischgas bzw. mit Frischgemisch versorgt. Über eine Abgasleitung 5 wird Abgas von den Zylindern 3 abgeführt. Von der Frischgasleitung 4 gehen einzelne Einlassleitungen 6 zu den einzelnen Zylindern 3 ab, die auch als Saugrohre bezeichnet werden können. Die Zylinder 3 stehen über einzelne Auslassleitungen 7 mit der Abgasleitung 5 in Verbindung, die auch als Krümmer bezeichnet werden können.

Für Ladungswechselvorgänge sind die Zylinder 3 mit Ladungswechselventilen versehen. Im Beispiel weist jeder Zylinder 3 zwei Einlassventile 8 und zwei Auslassventile, nämlich ein erstes Auslassventil 9 und ein zweites Auslassventil 10 auf. Ferner kann mit den Zylindern 3 eine hier nur vereinfacht dargestellte Einspritzeinrichtung 11 zusammenwirken. Die Einspritzeinrichtung 11 kann derart ausgestaltet sein, dass der Kraftstoff in das jeweilige Saugrohr 6 oder direkt in den Zylinder 3 oder durch eine Kombination aus beidem eingespritzt werden kann. Bei einem fremdgezündeten Kolbenmotor 1 kann außerdem eine hier nur vereinfacht dargestellte Zündeinrichtung 12 vorgesehen und den Zylindern 3 zugeordnet sein.

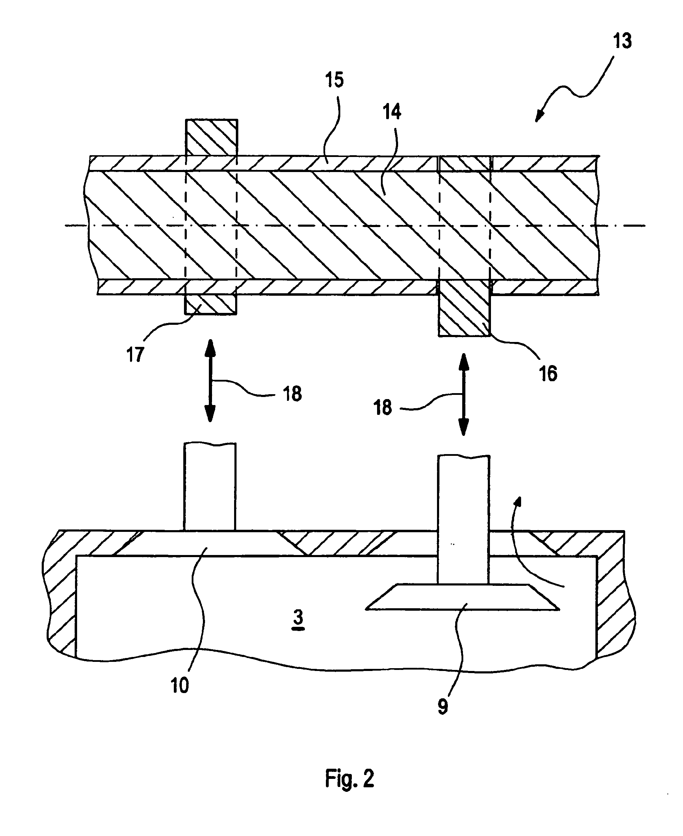

Zum Betätigen bzw. zum Ansteuern der Auslassventile 9, 10 weist der Kolbenmotor 1 eine Doppelnockenwelle 13 auf. Diese umfasst entsprechend Fig. 2 eine Innenwelle 14 und eine als Hohlwelle ausgestaltete Außenwelle 15, die koaxial zur Innenwelle 14 angeordnet ist. Die beiden Wellen 14, 15 sind ineinander angeordnet und relativ zueinander drehverstellbar. Die Innenwelle 14 trägt im gezeigten Beispiel für jedes erste Auslassventil 9 einen ersten Nocken 16. Somit betätigt die Innenwelle 14 über die ersten Nocken 16 die ersten Auslassventile 9. Die Außenwelle 15 weist im Beispiel für jedes zweite Auslassventil 10 einen zweiten Nocken 17 auf. Somit werden alle zweiten Auslassventile 10 mit Hilfe der Außenwelle 15 über deren zweite Nocken 17 gesteuert.

Fig. 2 zeigt vereinfacht das Zusammenspiel der beiden Wellen 14, 15 bzw. deren Nocken 16, 17 mit den beiden Auslassventilen 9, 10 eines der Zylinder 3. Die mechanische Betätigungsstrecke zwischen dem jeweiligen Nocken 16, 17 und dem jeweiligen Auslassventil 9, 10 ist hier vereinfacht durch Doppelpfeile 18 angedeutet. Die Relativlage der beiden Wellen 14, 15 ist beispielsweise so einstellbar, dass die ersten Nocken 16 und die zweiten Nocken 17 die beiden Auslassventile 9, 10 synchron zum Öffnen und Schließen ansteuern. Durch Verändern der relativen Drehlage zwischen den beiden Wellen 14, 15, die im Folgenden als Relativlage bezeichnet wird, können einerseits der Öffnungszeitpunkt bzw. der Schließzeitpunkt des ersten Auslassventils 9 entweder nach früh oder nach spät verstellt werden. Ebenso lassen sich der Öffnungszeitpunkt bzw. der Schließzeitpunkt des zweiten Auslassventils 10 entweder nach früh oder nach spät verschieben. Der Öffnungszeitpunkt des zuerst öffnenden Auslassventils 9, 10 bildet den Öffnungszeitpunkt eines Auslasszeitfensters. Der Schließzeitpunkt des zuletzt schließenden Auslassventils 9, 10 bildet den Schließzeitpunkt des Auslasszeitfensters. Durch die Veränderung der Drehlage zwischen den Wellen 14, 15 kann die Länge des Auslasszeitfensters sowie die Gesamtlage des Auslasszeitfensters relativ zum Kurbelwellenwinkel einer hier nicht gezeigten Kurbelwelle des Kolbenmotors 1 verändert werden.

Zum Umstellen der Innenwelle 14 relativ zur Außenwelle 15 ist gemäß Fig. 1 eine Stelleinrichtung 19 vorgesehen, die mit Hilfe einer Steuereinrichtung 20 ansteuerbar ist. Ein Verstellen der Innenwelle 14 und der Außenwelle 15 relativ zur Kurbelwelle kann mit einer in die Stelleinrichtung 19 integrierten oder aber auch mit einer separaten Stelleinrichtung erfolgen.

Der Kolbenmotor 1 ist zusätzlich mit einem Abgasturbolader 21 ausgestattet, dessen Verdichter 22 in die Frischgasleitung 4 eingebunden ist und dessen Turbine 23 in die Abgasleitung 5 eingebunden ist. Üblicherweise sind Verdichter 22 und Turbine 23 über eine gemeinsame Welle 24 miteinander antriebsgekoppelt und bilden insgesamt das Laufzeug des Abgasturboladers 21.

Um nun bei niedrigen Drehzahlen bzw. bei niedrigen Lasten des Kolbenmotors 1 ein rasches Ansprechen des Turboladers 21 zu bewirken, kann die Steuereinrichtung 20 die Stelleinrichtung 19 so ansteuern, dass diese die Relativlage zwischen den Wellen 14, 15 so verändert, dass der Öffnungszeitpunkt des ersten Auslassventils 9 oder alternativ des zweiten Auslassventils 10 bei allen Zylindern 3 entsprechend einer ersten Alternative nach früh verschoben wird. D.h., eines der beiden Auslassventile 9, 10 öffnet früher als im Normalbetrieb. In der Folge kann Abgas bei einem höheren Druck und bei einer höheren Temperatur gegenüber konventionellen Steuerzeiten aus dem jeweiligen Zylinder 3 entweichen. Insbesondere hat zu diesem Zeitpunkt der jeweilige Kolben seinen unteren Totpunkt noch nicht erreicht, so dass der Energieinhalt des Gases noch relativ hoch ist. Entsprechend einer zweiten Alternative kann die Steuereinrichtung 20 die Stelleinrichtung 19 so ansteuern, dass diese die Relativlage zwischen den Wellen 14, 15 so verändert, dass der Öffnungszeitpunkt des ersten Auslassventils 9 oder alternativ des zweiten Auslassventils 10 bei allen Zylindern 3 nach spät verschoben wird, um bei niedrigen Drehzahlen bzw. bei niedrigen Lasten des Kolbenmotors 1 ein rasches Ansprechen des Turboladers 21 zu bewirken. Mit anderen Worten, eines der beiden Auslassventile 9,10 öffnet später als im Normalbetrieb. In der Folge kann das Abgas bei höherem Druck und bei höherer Temperatur gegenüber konventionellen Steuerzeiten aus dem jeweiligen Zylinder 3 entweichen. Insbesondere hat zu diesem Zeitpunkt der jeweilige Kolben seinen unteren Totpunkt bereits überschritten, so dass durch die sich anschließende Rekompression der Energiegehalt des Gases bereits wieder relativ hoch ist. Dementsprechend besitzt das Abgas bei beiden Alternativen eine deutlich höhere Enthalpie, die an der Turbine 23 in kinetische Energie umgewandelt werden kann. Dementsprechend kann die Turbine 23 vergleichsweise rasch beschleunigen, wodurch das Anfahren des Turboladers 21 entsprechend verkürzt wird.

Bei den hier gezeigten Ausführungsbeispielen sind alle Zylinder 3 des Kolbenmotors 1 mit zwei Auslassventilen 9, 10 ausgestattet, die jeweils über die beiden Wellen 14, 15 der Doppelnockenwelle 13 separat ansteuerbar sind. Alternativ ist jedoch auch eine Ausführungsform denkbar, bei der die Anzahl der Zylinder 3, die zwei Auslassventile 9, 10 aufweisen, die über die beiden Wellen 14, 15 der Doppelnockenwelle 13 separat ansteuerbar sind, kleiner ist, als die Gesamtzahl der Zylinder 3 des Kolbenmotors 1. Die anderen Zylinder 3 können dann jeweils nur eines oder mehrere Auslassventile aufweisen, die jedoch alle nur über die Innenwelle 14 oder alternativ nur über die Außenwelle 15 ansteuerbar sind. Bei einer derartigen Ausführungsform wird zum Beschleunigen des Abgasturboladers 21 nicht allen Zylindern 3 das Abgas früher entnommen, sondern beispielsweise nur einem Zylinder 3 oder nur zwei Zylindern 3, jedenfalls einer gegenüber der Gesamtzahl der Zylinder 3 reduzierten Zylinderzahl. Bei einer solchen Ausführungsform wird die an die Kurbelwelle des Kolbenmotors 1 übertragbare Arbeitsleistung durch das frühere bzw. spätere Öffnen des jeweiligen Auslassventils 9, 10 nicht so stark reduziert, wie bei der zuvor beschriebenen Ausführungsform, bei der das Abgas sämtlichen Zylindern 3 vorübergehend bei einem erhöhten Zylinderdruck entnommen wird.

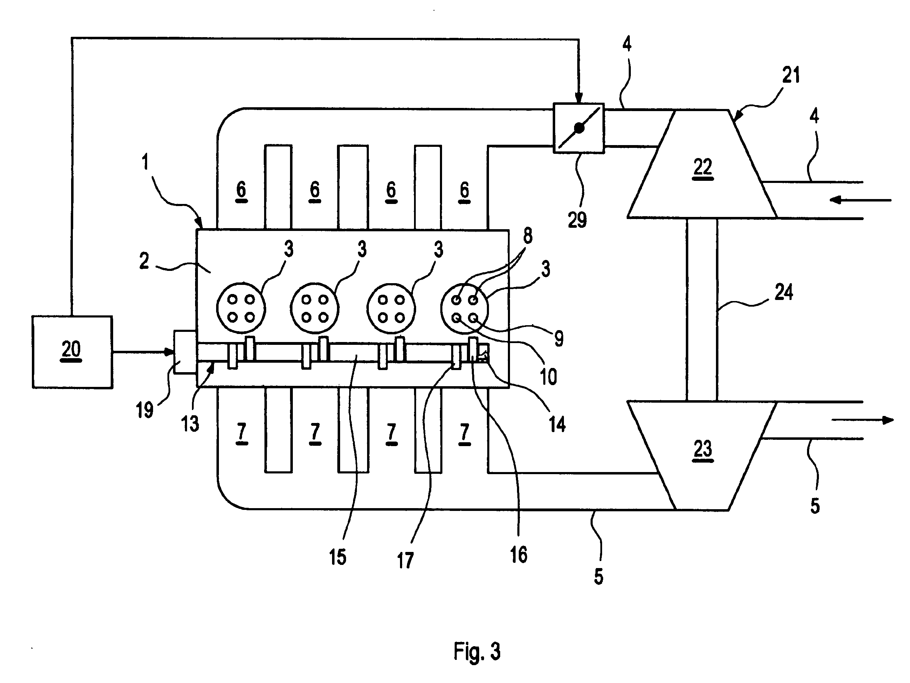

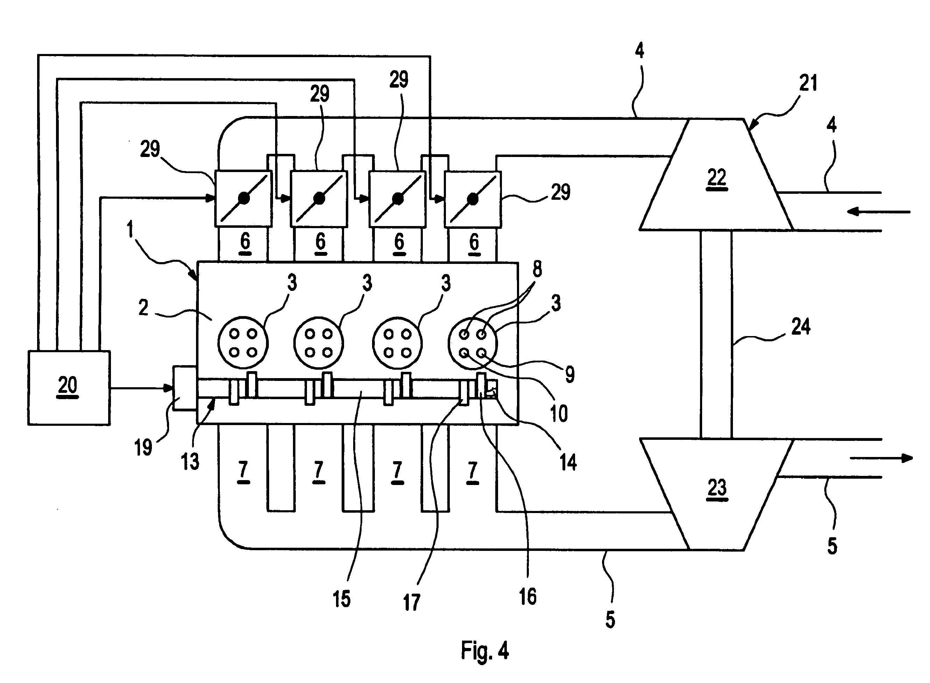

Die Fig. 3 und 4 zeigen weitere Ausführungsformen des in Fig. 1 gezeigten Kolbenmotors 1, wobei jedoch zur vereinfachten Darstellung die Einspritzeinrichtung 11 und die Zündeinrichtung 12 weggelassen sind. Entsprechend den Fig. 3 und 4 kann der Kolbenmotor 1 zumindest ein schnellschaltendes Ventil 29 aufweisen. Dieses ist stromauf der Einlassventile 8 in einer Frischgas führenden Leitung des Kolbenmotors 1 angeordnet. Unter einem schnellschaltenden Ventil 29 wird in vorliegendem Zusammenhang ein Ventil 29 verstanden, das insbesondere ähnliche Schaltzeiten beim Umschalten zwischen einem Schließzustand und einem Offenzustand bzw. von einem Offenzustand zu einem Schließzustand erreicht, wie die Gaswechselventile 8, 9, 10. Insbesondere können derartige schnellschaltende Ventile 29, die aufgrund ihrer Anordnung im Frischgastrakt im Folgenden auch als Frischgasventile 29 bezeichnet werden, Schaltzeiten erreichen, die kleiner als 10 ms sind. Die Frischgasventile 29 können mit einer Klappe arbeiten, die hier symbolisch angedeutet ist und diskontinuierlich zwischen einer Schließstellung und einer Offenstellung umschaltbar ist. Ebenso sind kontinuierlich arbeitende Frischgasventile 29 denkbar, bei denen die Klappe oder ein Drehschieber oder ein beliebiges anderes Ventilglied mit gleichbleibender Drehrichtung rotiert und dadurch ebenfalls entsprechende Schaltzeiten ermöglicht. Diskontinuierlich arbeitende, schnellschaltende Ventile 29 können auch als Lufttaktventile bezeichnet werden.

Bei der in Fig. 3 gezeigten Ausführungsform ist allen Zylindern 3 ein gemeinsames Frischgasventil 29 zugeordnet. Im Unterschied dazu ist bei der in Fig. 4 gezeigten Ausführungsform jedem Zylinder 3 ein separates Frischgasventil 29 zugeordnet. Hierzu sind die einzelnen Frischgasventile 29 in den Saugrohren 6 angeordnet. Die Frischgasventile 29 lassen sich durch eine entsprechende Steuereinrichtung betätigen. Im vorliegenden Fall ist diese Steuereinrichtung in die ohnehin schon vorhandene Steuereinrichtung 20 integriert. Grundsätzlich kann auch eine separate Steuereinrichtung zur Betätigung der Frischgasventile 29 vorgesehen sein. Die jeweilige Steuereinrichtung 20 kann nun so ausgestaltet sein, dass sie das jeweilige Frischgasventil 29 in Abhängigkeit eines aktuellen Betriebszustands des Kolbenmotors 1 betätigt. Zu diesem Zweck kann die Steuereinrichtung 20 mit einem hier nicht gezeigten, üblichen Motorsteuergerät gekoppelt sein. Dabei ist es grundsätzlich möglich, die gezeigte Steuerung 20 hardwaremäßig in das genannte Motorsteuergerät zu integrieren und/oder softwaremäßig in besagtes Motorsteuergerät zu implementieren.

Die Steuereinrichtung 20 kann das jeweilige Frischgasventil 29 z.B. zur Realisierung einer Impulsaufladung der Zylinder 3 ansteuern. Durch die Ausnutzung gasdynamischer Effekte kann mit Hilfe des einen Frischgasventils 29 bzw. mit Hilfe der Frischgasventile 29 ein impulsartiger Frischgasstrom nach Art einer Druckwelle generiert werden, der beim Ladungswechselvorgang in den jeweiligen Zylinder 3 eingebracht wird. Auf diese Weise lässt sich die in den Zylindern 3 eingebrachte Frischladungsmasse steigern. Eine derartige Impulsaufladung lässt sich besonders dann vorteilhaft anwenden, wenn der Turbolader 21 aufgrund niedriger Drehzahlen und Motorlasten quasi inaktiv ist bzw. keine signifikante Druckerhöhung im Frischgas ermöglicht. Desweiteren kann mit Hilfe der Frischgasventile 29 eine Kälteladung nach dem sogenannten Miller-Verfahren realisiert werden, was eine Verbesserung der Schadstoffemissionen ermöglicht. Zusätzlich ist es ebenso möglich, mit Hilfe der Frischgasventile 29 eine Wärmeladung durch ein spätes Öffnen der Frischgasventile 29 zu generieren. Hierbei wird ein beschleunigtes Aufwärmen des Kolbenmotors 1 bei einem Kaltstart realisiert, was ebenfalls vorteilhaft ist für Schadstoffemissionen, Kraftstoffverbrauch und Lebensdauer.

Ferner kann mit Hilfe des wenigstens einen Frischgasventils 29 eine Entdrosselung der Frischgasanlage bzw. des Kolbenmotors 1 in der Teillast realisiert werden. Das Frischgasventil 29 selbst ist keine Drossel. Mit einer Drossel kann der durchströmbare Querschnitt quasi stufenlos in der Frischgasleitung variiert bzw. gedrosselt werden kann. Mit Hilfe des Frischgasventils 29 lässt sich eine entdrosselte Laststeuerung mittels Füllungsvariation ohne Verwendung einer Drossel realisieren. Das Frischgas gelangt dabei ungedrosselt, d.h. ohne Verwendung einer Drosselklappe oder dergleichen zu den Zylindern 3, was letztlich den Wirkungsgrad des Kolbenmotors 1 verbessert. Mit Hilfe der in den Saugrohren 6 angeordneten Frischgasventile 29 kann der Frischgasstrom einfach ausgeschaltet werden, sobald die gewünschte Befüllung im jeweiligen Zylinder 3 erreicht ist.

Dementsprechend ist bei einer bevorzugten Ausführungsform des Kolbenmotors 1 die Frischgasleitung 4 bzw. die komplette Frischgasanlage ungedrosselt bzw. entdrosselt, also ohne ein spezielles, der Drosselung dienendes Drosselelement.

Um das Hochfahren des Abgasturboladers 21 zusätzlich zum frühen Öffnen des jeweiligen Auslassventils 9, 10 beschleunigen zu können, kann die Steuereinrichtung 20 bzw. eine geeignete andere Steuereinrichtung so mit der Einspritzeinrichtung 11 zusammenwirken, dass für diesen Fall der Einspritzzeitpunkt und/oder bei fremdgezündeten Motoren auch der Zündzeitpunkt im jeweiligen Zylinder 3 auf geeignete Weise so verschoben wird, dass sich aufgrund einer späten Verbrennungsschwerpunktlage eine gegenüber einer konventionellen Schwerpunktlage höhere Abgasenthalpie ergibt. Zusätzlich oder alternativ kann die Steuerung 20 bzw. eine beliebige andere geeignete Steuerung mit der Zündeinrichtung 12 zusammenwirken, derart, dass zum Beschleunigen des Abgasturboladers 21 der Zündzeitpunkt auf geeignete Weise verschoben wird.

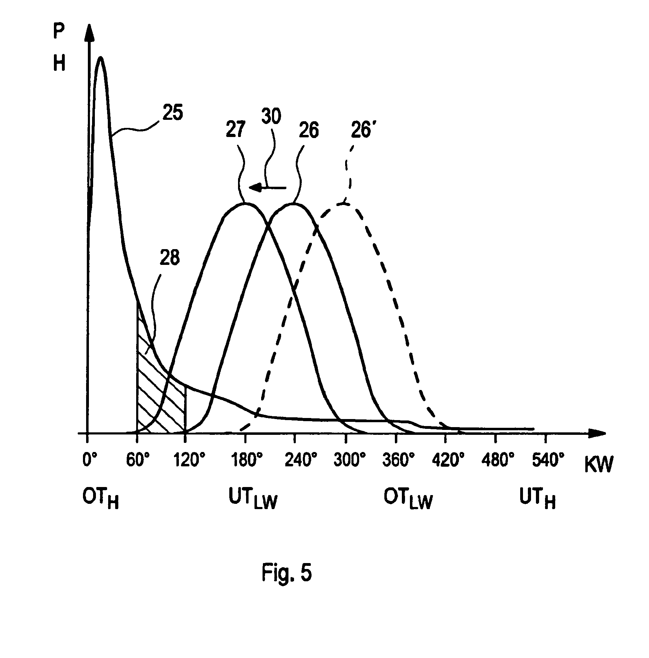

Mit Bezug auf Fig. 5 soll im Folgenden die Arbeitsweise des Kolbenmotors 1 entsprechend der ersten Alternativen näher erläutert werden. Fig. 5 zeigt ein Diagramm, auf dessen Ordinate ein Druck P in einem Zylinder 3 sowie ein Hub H der beiden Auslassventile 9, 10 dieses Zylinders 3 aufgetragen sind und dessen Abszisse den zugehörigen Kurbelwellenwinkel KW wiedergibt. Das Diagramm enthält einen exemplarischen Verlauf 25 des Drucks P im Zylinder 3 in Abhängigkeit des Kurbelwellenwinkels KW, wie er sich bei konventionellen Auslassventilsteuerzeiten ergeben würde. Desweiteren enthält das Diagramm einen Verlauf 26 des Hubs H des ersten Auslassventils 9 sowie einen Verlauf 27 des Hubs H des zweiten Auslassventils 10. Auch die beiden Hubverläufe 26, 27 sind in Abhängigkeit des Kurbelwellenwinkels KW aufgetragen.

Bei einem Normalbetrieb mit niedriger Last sind die beiden Auslassventile 9, 10 simultan angesteuert. Die entsprechenden Nocken 16, 17 sind hierzu mit identischen Steuerkonturen versehen, um identische Verläufe 26, 27 zu erhalten. Die beiden Verläufe 26, 27 sind bei synchroner Betätigung deckungsgleich und entsprechen dabei in Fig. 5 dem exemplarischen Verlauf 26 des ersten Auslassventils 9. Das bedeutet, dass beide Auslassventile 9, 10 bei einem Kurbelwellenwinkel von etwa 120° bezogen auf den hier bei 0°KW liegenden oberen Totpunkt OT_{H} mit ihrer Öffnungsbewegung beginnen, so dass sie am unteren Totpunkt UT_{LW} des zugehörigen Kolbens, der 180°KW bezogen auf OT_{H} entspricht, bereits weitgehend geöffnet sind. Ihre maximale Öffnung besitzen die Auslassventile 9, 10 dann bei 240°KW bezogen auf OT_{H}. Bei etwa 360°KW bezogen auf OT_{H}, das mit dem oberen Totpunkt OT_{LW} des Kolbens zusammenfällt oder auch etwas später oder früher, sind beide Auslassventile 9, 10 wieder geschlossen. Die gezeigte Auslasserhebungskurve 26 beinhaltet bereits ein frühes Öffnen eines Auslassventils, das nicht zwingend ist. Konventionelle Auslasssteuerzeiten beginnen mit dem Öffnen später. Mit unterbrochener Linie ist in das Diagramm gemäß Fig. 5 zusätzlich noch ein Verlauf 26' eingezeichnet, der einer sich bei konventionellen Auslasssteuerzeiten ergebenden Auslasserhebungskurve entspricht.

Wenn aus diesem normalen Betriebszustand heraus der Turbolader 21 in möglichst kurzer Zeit hochgefahren werden soll, so dass er sich durch eine kurze Ansprechzeit auszeichnet, wird durch eine entsprechende Betätigung der Doppelnockenwelle 13 die Relativlage zwischen der Innenwelle 14 und der Außenwelle 15 so verändert, dass das zweite Auslassventil 10 hinsichtlich seines Öffnungszeitpunkts nach früh verschoben wird. In dem in Fig. 5 gezeigten Beispiel ist dies daran erkennbar, dass der dem zweiten Auslassventil 10 zugeordnete Hubverlauf 27 entsprechend einem Pfeil 30 um beispielsweise 60°KW in Richtung kleinerer Kurbelwellenwinkel KW verschoben ist. Das bedeutet, dass das zweite Auslassventil 10 bereits bei 60°KW bezogen auf OT_{H} mit seiner Öffnungsbewegung beginnt. Die Relativlage des dem ersten Auslassventil 9 zugeordneten Hubverlaufs 26 bleibt bezüglich des Kurbelwellenwinkels KW dabei unverändert. Da somit der Schließzeitpunkt des sich insgesamt ausbildenden Auslasszeitfensters bei etwa 360°KW bleibt, wird das gesamte Auslasszeitfenster im Beispiel um 60° nach früh vergrößert. Während das Auslasszeitfenster im zuvor beschriebenen Normalbetrieb von 120°KW bis 360°KW reicht, also somit 240°KW umfasst, ist es jetzt um 60°KW nach früh vergrößert und reicht jetzt von 60°KW bezogen auf OT_{H} bis 360°KW bezogen auf OT_{H} und umfasst insgesamt 300°KW. In Fig. 5 ist außerdem ein schraffierter Bereich 28 innerhalb des Druckverlaufs 25 markiert. Dieser Bereich 28 symbolisiert beispielhaft die gegenüber einem nicht vorgezogenen zweiten Auslassventil 10 zusätzlich bereitgestellte Abgasenthalpie, die durch das früher geöffnete zweite Auslassventil 10 mit der Abgasströmung in die Abgasleitung 5 gelangt und zum Beschleunigen der Turbine 23 nutzbar ist.

Die Steuereinrichtung 20 kann zum Beschleunigen der Turbine 23 gemäß einer bevorzugten Ausführungsform die Öffnungszeit des einen Auslassventils 9, 10, im Beispiel des zweiten Auslassventils 10, in einen Bereich legen, der sich zweckmäßig zwischen 30% bis 90% eines Expansionshubs des zugehörigen Kolbens befindet. Im gezeigten Beispiel wird der Öffnungszeitpunkt von 2/3 auf 1/3 des Expansionshubs verschoben.

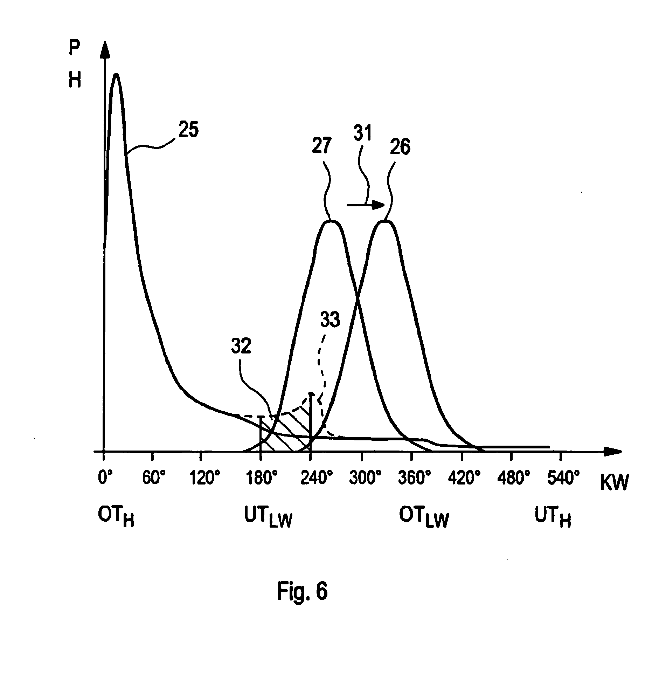

Mit Bezug auf Fig. 6 soll im Folgenden die Arbeitsweise des Kolbenmotors 1 entsprechend der zweiten Alternativen näher erläutert werden. Fig. 6 zeigt wieder ein Diagramm, auf dessen Ordinate ein Druck P in einem Zylinder 3 sowie ein Hub H der beiden Auslassventile 9, 10 dieses Zylinders 3 aufgetragen sind, und dessen Abszisse den zugehörigen Kurbelwellenwinkel KW wiedergibt. Das Diagramm enthält einen exemplarischen Verlauf 25 des Drucks P im Zylinder 3 in Abhängigkeit des Kurbelwellenwinkels KW, wie er sich bei konventionellen Auslassventilsteuerzeiten ergeben würde. Des Weiteren enthält das Diagramm einen Verlauf 26 des Hubs H des ersten Auslassventils 9 sowie einen Verlauf 27 des Hubs H des zweiten Auslassventils 10. Auch die beiden Hubverläufe 26, 27 sind in Abhängigkeit des Kurbelwellenwinkels KW aufgetragen.

Bei einem Normalbetrieb mit niedriger Last sind die beiden Auslassventile 9, 10 asynchron angesteuert. Auch in diesem Beispiel sind die beiden Verläufe 26, 27 identisch geformt, was durch Nocken 16, 17 mit identischen Steuerkonturen realisierbar ist. Wie auch bei der ersten Alternative ist dies nicht zwingend erforderlich. Beim Normalbetrieb ist im Beispiel der Verlauf 27 des zweiten Auslassventils 10 zeitlich vor dem Verlauf 26 des ersten Auslassventils 9 positioniert. Das heißt, das zweite Auslassventil 10 öffnet im Normalbetrieb vor dem ersten Auslassventil 9. Dafür schließt das erste Auslassventil 9 nach dem zweiten Auslassventil 10. Während bei der in Fig. 5 gezeigten Ausführungsform die Steuerkonturen der Nocken 16, 17 so geformt sind, dass die Verläufe 26, 27 der Auslassventil 9, 10 jeweils ein Öffnungszeitfenster von etwa 240° KW besitzen, zeigen die in Fig. 6 dargestellten Verläufe 26, 27 spezielle Ausführungsformen, die kleinere Öffnungszeitfenster ermöglichen. In den dargestellten Beispielen sind die Steuerkonturen der Nocken 16, 17 so geformt, dass die Öffnungszeitfenster der beiden Auslassventile 9, 10 jeweils nur etwa 180° betragen. Grundsätzlich sind auch andere Öffnungszeitfenster denkbar, die kleiner als 240° KW sind. Insbesondere sind auch Öffnungszeitfenster denkbar, die kleiner als 180° KW sind.

Im gezeigten Beispiel führt dies rein exemplarisch dazu, dass das zweite Auslassventil 10 entsprechend seinem Verlauf 27 bei einem Kurbelwellenwinkel von etwa 180° bezogen auf den hier bei 0° KW liegenden oberen Totpunkt OT_{H} mit seiner Öffnungsbewegung beginnt, also etwa im Bereich eines unteren Totpunkts UT_{LW} des zugehörigen Kolbens. Seine maximale Öffnung besitzt das zweite Auslassventil 10 bei etwa 270° KW bezogen auf OT_{H}. Das zweite Auslassventil 10 schließt bei etwa 360° KW bezogen auf OT_{H}. Der Verlauf 27, der auch als Auslasserhebungskurve 27 bezeichnet werden kann, besitzt somit ein Öffnungszeitfenster von etwa 180° KW.

Der Verlauf 26 des ersten Auslassventils 9, der auch als Auslasserhebungskurve 26 bezeichnet werden kann, ist gegenüber der Auslasserhebungskurve 27 des zweiten Ventils im Beispiel um etwa 60° KW nach spät versetzt. Dementsprechend öffnet das erste Auslassventil 9 im Normalbetrieb bei etwa 240° KW, hat seine maximale Öffnungsweite bei etwa 330° KW und schließt etwa bei 420° KW. Somit besitzt auch die zweite Auslasserhebungskurve 26 ein Öffnungszeitfenster von etwa 180° KW. Durch die sich überschneidenden Öffnungszeitfenster wird insgesamt ein Auslasszeitfenster für den jeweiligen Zylinder definiert, das etwa 240° KW besitzt. Es beginnt mit dem Öffnungszeitpunkt des früher öffnenden zweiten Auslassventils 10, also bei etwa 180° KW und endet am Schließzeitpunkt des später schließenden ersten Auslassventils 9, also bei etwa 420° KW. Im Vergleich zu der in Fig. 5 dargestellten Variante ist das Öffnungszeitfenster im Normalbetrieb bei beiden Alternativen etwa gleich groß. Die Positionierung des Auslasszeitfenster bzw. der beiden Verläufe 26, 27 der zweiten Alternative entspricht dabei dem mit unterbrochener Linie dargestellten Verlauf 26' eines konventionellen Auslassventils.

Wenn aus diesem Normalbetriebszustand heraus der Turbolader 21 in möglichst kurzer Zeit hochgefahren werden soll, so dass er sich durch eine kurze Ansprechzeit auszeichnet, wird durch eine entsprechende Betätigung der Doppelnockenwelle 13 die Relativlage zwischen der Innenwelle 14 und der Außenwelle 15 so verändert, dass das zweite Auslassventil 10 hinsichtlich seines Öffnungszeitpunkts nach spät verschoben wird. In dem in Fig. 6 gezeigten Beispiel ist dies daran erkennbar, dass der dem zweiten Auslassventil 10 zugeordnete Hubverlauf 27 entsprechend einen Pfeil 31 um beispielsweise 60° KW in Richtung größerer Kurbelwellenwinkel KW verschoben ist. Das bedeutet, dass das zweite Auslassventil 10 dann erst bei 240° KW bezogen auf OT_{H} mit seiner Öffnungsbewegung beginnt. Die Relativlage des dem ersten Auslassventil 9 zugeordneten Hubverlaufs 26 bleibt bezüglich des Kurbelwellenwinkels KW dabei unverändert. Da somit der Schließzeitpunkt des sich insgesamt ausbildenden Auslasszeitfensters bei etwa 420° KW bleibt, wird das gesamte Auslasszeitfenster im Beispiel um etwa 60° nach spät verkleinert. Während das Auslasszeitfenster im zuvor beschriebenen Normalbetrieb von etwa 180° KW bis etwa 420° KW reicht, also somit etwa 240° KW umfasst, ist es jetzt um 60° KW nach spät verkleinert und reicht nur noch von etwa 240° KW bis etwa 420° KW und umfasst insgesamt nur noch 180° KW. Während dieses Beschleunigungsbetriebs sind die beiden Verläufe 26, 27 deckungsgleich und entsprechen dabei dem in Fig. 6 dargestellten exemplarischen Verlauf 26 des ersten Auslassventils. Beide Auslassventile 9, 10 öffnen und schließen dann entsprechend der dem ersten Auslassventil zugeordneten Auslasserhebungskurve 26.

In Fig. 6 ist außerdem ein schraffierter Bereich 32 innerhalb des Druckverlaufs 25 und innerhalb eines modifizierten Druckverlaufs 33 markiert. Der modifizierte Druckverlauf 33 ergibt sich durch den Umstand, dass der Öffnungszeitpunkt des Auslasszeitfensters im gezeigten Beispiel zeitlich nach dem unteren Totpunkt UT_{LW} liegt, so das sich der jeweilige Kolben bereits wieder in seiner Kompressionsrichtung bewegt. Dementsprechend steigt im jeweiligen Zylinder während dieser Rekompressionsphase der Druck ebenso wie die Temperatur im Abgas wieder an. Der schraffierte Bereich 32 symbolisiert beispielhaft die gegenüber einem nicht nach spät verschobenen zweiten Auslassventil 10 zusätzlich bereitgestellte Abgasenthalpie, die durch das später geöffnete zweite Auslassventil 10 mit der Abgasströmung in die Abgasleitung 5 gelangt und zum Beschleunigen der Turbine 23 nutzbar ist.

Die Steuereinrichtung 20 kann zum Beschleunigen der Turbine 23 gemäß einer bevorzugten Ausführungsform die Öffnungszeit des einen Auslassventils 9, 10, im Beispiel des zweiten Auslassventils 10, in einen Bereich legen, der sich zweckmäßig zwischen 0% bis 30% eines Rekompressionshubs des zugehörigen Kolbens befindet. Im gezeigten Beispiel wird der Öffnungszeitpunkt von UT_{LW} auf etwa Drittel des Rekompressionshubs verschoben. Wie gezeigt, befindet sich die Auslasserhebungskurve 26 des ersten Auslassventils 9 im Beispiel bereits in diesem Bereich, d.h. das erste Auslassventil 9 öffnet auch im Normalbetrieb gegenüber UT_{LW} verspätet, also in der Rekompressionsphase.

## Patentansprüche

1. Kolbenmotor, insbesondere für ein Kraftfahrzeug,
- mit wenigstens einem Zylinder (3), der zumindest zwei Auslassventile (9, 10) aufweist,
- mit einer Doppelnockenwelle (13) zum Steuern der Auslassventile (9, 10),
- wobei die Doppelnockenwelle (13) eine Innenwelle (14) mit wenigstens einem ersten Nocken (16) zum Steuern des jeweiligen ersten Auslassventils (9) und eine dazu koaxiale Außenwelle (15) mit wenigstens einem zweiten Nocken (17) zum Steuern des jeweiligen zweiten Auslassventils (10) aufweist,
- wobei die Innenwelle (14) und die Außenwelle (15) zum Verändern des Auslasszeitfensters der Auslassventile (9, 10) relativ zueinander drehverstellbar sind,
**dadurch gekennzeichnet,**
- **dass** ein Abgasturbolader (21) vorgesehen ist, dessen Turbine (23) in einer Abgasleitung (5) des Kolbenmotors (1) angeordnet ist,
- **dass** eine Steuereinrichtung (20) zum Ansteuern einer Stelleinrichtung (19) zum Drehverstellen der relativen Drehlage zwischen den Wellen (14, 15) vorgesehen ist,
- **dass** die Steuereinrichtung (20) zum Beschleunigen der Turbine (23) den Öffnungszeitpunkt des jeweiligen ersten Auslassventils (9) oder des jeweiligen zweiten Auslassventils (10) nach früh oder nach spät verschiebt,
- **dass** die Steuereinrichtung (20) entweder
- zum Beschleunigen der Turbine (23) den Öffnungszeitpunkt des jeweiligen Auslassventils (9, 10) in einen Bereich zwischen 30% bis 90% des Expansionshubs eines im zugehörigen Zylinder (3) hubverstellbaren Kolbens legt, wobei die Steuereinrichtung (20) für einen Normalbetrieb die beiden Auslassventile (9, 10) synchron zum Öffnen betätigt, oder
- für einen Normalbetrieb das eine Auslassventil (9, 10) früher zum Öffnen betätigt als das andere Auslassventil (9, 10), dessen Öffnungszeitpunkt in einem Rekompressionshub des im zugehörigen Zylinder (3) hubverstellbaren Kolbens liegt, wobei die Steuereinrichtung (20) zum Beschleunigen der Turbine (23) den Öffnungszeitpunkt des im Normalbetrieb früher öffnenden Auslassventils (9, 10) nach spät verschiebt, soweit, bis die beiden Auslassventile (9, 10) synchron öffnen.

2. Kolbenmotor nach Anspruch 1,
**dadurch gekennzeichnet,**
**dass** die Öffnungszeitfenster der beiden Auslassventile (9, 10) jeweils kleiner als 240° Kurbelwellenwinkel oder kleiner als 200° Kurbelwellenwinkel oder kleiner als 180° Kurbelwellenwinkel sind.

3. Kolbenmotor nach Anspruch 1 oder 2,
**dadurch gekennzeichnet,**
**dass** alle Zylinder (3) des Kolbenmotors (1) zwei Auslassventile (9, 10) aufweisen, die über die beiden Wellen (14, 15) der Doppelnockenwelle (13) separat ansteuerbar sind.

4. Kolbenmotor nach Anspruch 1 oder 2,
**dadurch gekennzeichnet,**
**dass** die Anzahl der Zylinder (3), deren beide Auslassventile (9, 10) über die beiden Wellen (14, 15) der Doppelnockenwelle (13) separat ansteuerbar sind, kleiner ist als die Gesamtzahl der Zylinder (3) des Kolbenmotors (1).

5. Kolbenmotor nach einem der Ansprüche 1 bis 4,
**dadurch gekennzeichnet,**
- **dass** zumindest ein schnellschaltendes Ventil (29) vorgesehen ist, das stromauf von den Zylindern (3) zugeordneten Einlassventilen (8) in einer Frischgas führenden Leitung (4, 6) des Kolbenmotors (1) angeordnet ist, und/oder
- **dass** eine Steuereinrichtung (20) zum Ansteuern des wenigstens einen Ventils (29) vorgesehen ist, und/oder
- **dass** entweder jedem Zylinder (3) ein separates schnellschaltendes Ventil (29) zugeordnet ist oder dass allen Zylindern (3) ein gemeinsames schnellschaltendes Ventil (29) zugeordnet ist.

6. Kolbenmotor nach Anspruch 5,
**dadurch gekennzeichnet,**
**dass** die Steuereinrichtung (20) das jeweilige Ventil (29) in Abhängigkeit eines aktuellen Betriebszustands des Kolbenmotors (1) zur Realisierung einer Impulsaufladung und/oder einer Entdrosselung und/oder einer Kälteladung und/oder einer Wärmeladung ansteuert.

7. Kolbenmotor nach einem der Ansprüche 1 bis 6,
**dadurch gekennzeichnet,**
**dass** eine den Zylindern (3) Frischgas zuführende Frischgasleitung (4) ungedrosselt oder entdrosselt ist.

8. Kolbenmotor nach einem der Ansprüche 1 bis 7,
**dadurch gekennzeichnet,**
- **dass** eine Einspritzeinrichtung (11) zum Einspritzen von Kraftstoff in den jeweiligen Zylinder (3) vorgesehen ist,
- **dass** eine Steuereinrichtung (20) zum Ansteuern der Einspritzeinrichtung (11) vorgesehen ist,
- **dass** die Steuereinrichtung (20) zum Beschleunigen der Turbine (23) den Einspritzzeitpunkt verschiebt.

9. Kolbenmotor nach Anspruch 8,
**dadurch gekennzeichnet,**
**dass** die Steuereinrichtung (20) zum Beschleunigen der Turbine (23) bei einem selbstzündenden Motor (1) durch Mehrfacheinspritzung die Verbrennungsschwerpunktlage zur Erhöhung der Abgasenthalpie gegenüber einer konventionellen Schwerpunktlage in Richtung spät verschiebt.

10. Kolbenmotor nach einem der Ansprüche 1 bis 9,
**dadurch gekennzeichnet,**
- **dass** eine Zündeinrichtung (12) zum Zünden eines Kraftstoff-Frischgas-Gemischs im jeweiligen Zylinder (3) vorgesehen ist,
- **dass** eine Steuereinrichtung (20) zum Ansteuern der Zündeinrichtung (12) vorgesehen ist,
- **dass** die Steuereinrichtung (20) zum Beschleunigen der Turbine (23) den Zündzeitpunkt verschiebt.

## Claims

1. A piston engine, in particular for a motor vehicle,
- having at least one cylinder (3) that has at least two discharge valves (9, 10),
- having a double overhead camshaft (13) for controlling the discharge valves (9, 10),
- wherein the double overhead camshaft (13) has both an inner shaft (14), which has at least one first cam (16) for controlling the respective first discharge valve (9), and an outer shaft (15) that is coaxial to said first inner shaft and has at least one second cam (17) for controlling the respective second discharge valve (10),
- wherein the inner shaft (14) and the outer shaft (15) are rotationally adjustable relative to one another in order to change the discharge time frame of the discharge valves (9, 10),
**characterised in that**
- an exhaust gas turbocharger (21) is provided the turbine (23) of which is arranged in an exhaust-gas line (5) of the piston engine (1),
- a control device (20) is provided for controlling an adjusting device (19) for the rotational adjustment of the relative rotational position between the shafts (14, 15),
- in order to accelerate the turbine (23), the control device (20) shifts to earlier or later the opening time of the respective first discharge valve (9) or of the respective second discharge valve (10),
and wherein either
- in order to accelerate the turbine (23), the control device (20) range between 30% to 90% of the expansion stroke of a stroke-adjustable piston in the associated cylinder (3), wherein for a standard operation, the control device (20) synchronously actuates both of the discharge valves (9, 10) to open; or
- for a standard operation, the control device (20) actuates the one discharge valve (9, 10) to open earlier than the other discharge valve (9, 10), the opening time of which is in a recompression stroke of the stroke-adjustable piston in the associated cylinder (3), wherein in order to accelerate the turbine (23), the control device (20) shifts the opening time of the discharge valve (9, 10), which opens earlier in standard operation, to later, in particular to the extent that both of the discharge valves (9, 10) open synchronously.

2. The piston engine as specified in claim 1,
**characterised in that**
the opening time frames of both of the discharge valves (9, 10) are respectively smaller than 240° crankshaft angle, or smaller than 200° crankshaft angle or smaller than 180° crankshaft angle.

3. The piston engine as specified in claim 1 or 2,
**characterised in that**
all cylinders (3) of the piston engine (1) have two discharge valves (9, 10) that are separately controllable by means of both of the shafts (14, 15) of the double overhead camshaft (13).

4. The piston engine as specified in claim 1 or 2,
**characterised in that**
the number of cylinders (3), both discharge valves (9, 10) of which cylinders being separately controllable by means of both of the shafts (14, 15) of the double overhead camshaft (13), is less than the total number of cylinders (3) of the piston engine (1).

5. The piston engine as specified in any one of the claims 1 to 4, **characterised in that**
- at least one fast-switching valve (29) is provided that is arranged upstream from the discharge valves (8) associated with the cylinders (3) and in a line (4, 6), which conducts fresh gas, of the piston engine (1), and/or
- a control device (20) is provided for controlling the at least one valve (29), and/or
- either each cylinder (3) is associated with a separate fast-switching valve (29) or a common fast-switching valve (29) is associated with all cylinders (3).

6. The piston engine as specified in claim 5,
**characterised in that**
the control device (20) of the respective valve (29) is controlled as a function of a current operational state of the piston engine (1) to realise a pulse charging and/or a de-throttling and/or a cold charging and/or a hot charging.

7. The piston engine as specified in any one of the claims 1 to 6,
**characterised in that**
a fresh-gas line (4) supplying the cylinders (3) with fresh-gas is unthrottled or de-throttled.

8. The piston engine as specified in any one of the claims 1 to 7,
**characterised in that**
- an injection arrangement (11) for injecting fuel into the respective cylinder (3) is provided,
- a control device (20) for controlling the injection arrangement (11) is provided,
- the control device (20) shifts the injection time in order to accelerate the turbine (23).

9. The piston engine as specified in claim 8,
**characterised in that**
in order to accelerate the turbine (23) in a spark-ignited engine (1), the control device (20) shifts to late the combustion position of centre of gravity by means of multiple injections so as to increase the exhaust-gas enthalpy in comparison with a conventional position of centre of gravity.

10. The piston engine as specified in any one of the claims 1 to 9,
**characterised in that**
- an ignition device (12) is provided for igniting a fuel-fresh gas mixture in the respective cylinder (3),
- a control device (20) is provided for controlling the ignition device (12),
- the control device (20) shifts the ignition time to accelerate the turbine (23).

## Revendications

1. Moteur à pistons, en particulier pour un véhicule automobile, comprenant
- au moins un cylindre (3) qui présente au moins deux soupapes d'échappement (9, 10),
- un double arbre à cames (13) pour commander lesdites soupapes d'échappement (9, 10),
- ledit double arbre à cames (13) présentant un arbre intérieur (14) avec au moins une première came (16) de commande de la première soupape d'échappement (9) respective ainsi qu'un arbre extérieur (15) coaxial à ce premier, avec au moins une deuxième came (17) de commande de la deuxième soupape d'échappement (10) respective,
- ledit arbre intérieur (14) et ledit arbre extérieur (15) étant réglables en rotation l'un par rapport à l'autre pour modifier l'intervalle de temps d'échappement des soupapes d'échappement (9, 10),
**caractérisé par le fait**
- **que** l'on prévoit un turbocompresseur à gaz d'échappement (21) dont la turbine (23) est disposée dans une conduite de gaz d'échappement (5) du moteur à pistons (1).
- **que** l'on prévoit un dispositif de commande (20) pour commander un dispositif de réglage (19) destiné à régler en rotation la position relative de rotation entre lesdits arbres (14, 15),
- **que**, pour accélérer la turbine (23), ledit dispositif de commande (20) fait reporter vers tôt ou vers tard le moment d'ouverture de la première soupape d'échappement (9) respective ou de la deuxième soupape d'échappement (10) respective,
- **que** ledit dispositif de commande (20), soit,
- pour accélérer la turbine (23), fait situer le moment d'ouverture de la soupape d'échappement (9, 10) respective dans une plage comprise entre 30 % et 90 % de la course d'expansion d'un piston réglable en course dans le cylindre associé (3), le dispositif de commande (20), pour un fonctionnement normal, actionnant les deux soupapes d'échappement (9, 10) de manière à ce qu'elles s'ouvrent en synchronisme, soit,
- pour un fonctionnement normal, il actionne l'une des soupapes d'échappement (9, 10) de manière à ce qu'elle s'ouvre plus tôt que l'autre soupape d'échappement (9, 10) dont le moment d'ouverture se situe dans une course de recompression du piston réglable en course dans le cylindre associé (3), le dispositif de commande (20), pour accélérer ladite turbine (23), faisant reporter vers tard le moment d'ouverture de la soupape d'échappement (9, 10) qui, en fonctionnement normal, s'ouvre plus tôt, et ceci jusqu'à ce que les deux soupapes d'échappement (9, 10) s'ouvrent en synchronisme.

2. Moteur à pistons selon la revendication 1, **caractérisé par le fait que** les intervalles de temps d'ouverture des deux soupapes d'échappement (9, 10) sont chacun inférieurs à 240° d'angle de vilebrequin ou inférieurs à 200° d'angle de vilebrequin ou inférieurs à 180° d'angle de vilebrequin.

3. Moteur à pistons selon la revendication 1 ou 2, **caractérisé par le fait que** tous les cylindres (3) du moteur à pistons (1) comprennent deux soupapes d'échappement (9, 10) qui peuvent être commandées séparément via les deux arbres (14, 15) du double arbre à cames (13).

4. Moteur à pistons selon la revendication 1 ou 2, **caractérisé par le fait que** le nombre des cylindres (3) dont les deux soupapes d'échappement (9, 10) peuvent être commandées séparément via les deux arbres (14, 15) du double arbre à cames (13) est inférieur au nombre total des cylindres (3) du moteur à pistons (1).

5. Moteur à pistons selon l'une quelconque des revendications 1 à 4, **caractérisé par le fait**
- **que** l'on prévoit au moins une soupape à action rapide (29) qui est agencée en amont de soupapes d'admission (8) associées aux cylindres (3), dans une conduite de gaz frais (4, 6) du moteur à pistons (1), et/ou
- **que** l'on prévoit un dispositif de commande (20) pour commander ladite au moins une soupape (29), et/ou
- **que**, soit, à chaque cylindre (3) est associée une soupape séparée à action rapide (29), soit à l'ensemble des cylindres (3) est associée une soupape commune à action rapide (29).

6. Moteur à pistons selon la revendication 5, **caractérisé par le fait que** ledit dispositif de commande (20) commande la soupape respective (29) en fonction d'un état actuel de fonctionnement du moteur à pistons (1) pour réaliser une suralimentation par impulsions et/ou une suppression d'étranglement et/ou une charge froide et/ou une charge thermique.

7. Moteur à pistons selon l'une quelconque des revendications 1 à 6, **caractérisé par le fait qu'**une conduite de gaz frais (4) qui amène du gaz frais aux cylindres (3) est non étranglée ou dépourvue d'étranglement.

8. Moteur à pistons selon l'une quelconque des revendications 1 à 7, **caractérisé par le fait**
- **que** l'on prévoit un dispositif d'injection (11) pour injecter du carburant dans le cylindre respectif (3),
- **que** l'on prévoit un dispositif de commande (20) pour commander ledit dispositif d'injection (11),
- **que**, pour accélérer la turbine (23), ledit dispositif de commande (20) fait reporter le moment d'injection.

9. Moteur à pistons selon la revendication 8, **caractérisé par le fait que**, pour accélérer la turbine (23) dans un moteur (1) à allumage automatique, ledit dispositif de commande (20) fait reporter vers tard, par une injection multiple, la position de centre de gravité de combustion pour augmenter l'enthalpie des gaz d'échappement par rapport à une position de centre de gravité conventionnelle.

10. Moteur à pistons selon l'une quelconque des revendications 1 à 9, **caractérisé par le fait**
- **que** l'on prévoit un dispositif d'allumage (12) pour allumer un mélange carburant/gaz frais dans le cylindre respectif (3),
- **que** l'on prévoit un dispositif de commande (20) pour commander ledit dispositif d'allumage (12),
- **que**, pour accélérer la turbine (23), ledit dispositif de commande (20) fait reporter le moment d'allumage.
